Europäisches Patentamt

European Patent Office

Office européen des brevets

(19)

(11) Publication number: **0 029 294**
**B1**

(12) **EUROPEAN PATENT SPECIFICATION**

(45) Date of publication of patent specification: **01.02.84**

(51) Int. Cl.³: **B 23 Q 35/123**

(21) Application number: **80303547.6**

(22) Date of filing: **09.10.80**

(54) **A tracer control apparatus.**

(30) Priority: **11.10.79 JP 131097/79**

(43) Date of publication of application:
**27.05.81 Bulletin 81/21**

(45) Publication of the grant of the patent:
**01.02.84 Bulletin 84/5**

(84) Designated Contracting States:
**DE FR GB**

(56) References cited:
**GB - A - 2 020 852**
**US - A - 3 475 997**
**US - A - 4 064 445**

(73) Proprietor: **FANUC LTD**
**5-1, Asahigaoka 3-chome Hino-shi**
**Tokyo 191 (JP)**

(72) Inventor: **Imazeki, Ryoji**
**No. 987-44, Naganuma-cho Hachioji-shi**
**Tokyo 192 (JP)**
Inventor: **Yamazaki, Etsuo**
**No. 566-93, Shimoongata-cha Hachioji-shi**
**Tokyo 192-01 (JP)**
Inventor: **Sasaki, Takao**
**No. 469-4, Kobiki-cho Hachioji-shi**
**Esuteito-Hachioji 2-502 Tokyo 193 (JP)**
Inventor: **Yamaguchi, Masashi**
**No. 2-10-5, Tamadaira Hino-shi**
**Akashiya-so 6 Tokyo 191 (JP)**

(74) Representative: **Bedggood, Guy Stuart et al,**
**Haseltine Lake & Co. Hazlitt House 28**
**Southampton Buildings Chancery Lane**
**London WC2A 1AT (GB)**

Courier Press, Leamington Spa, England.

## A tracer control apparatus

The present invention relates to a tracer control apparatus.

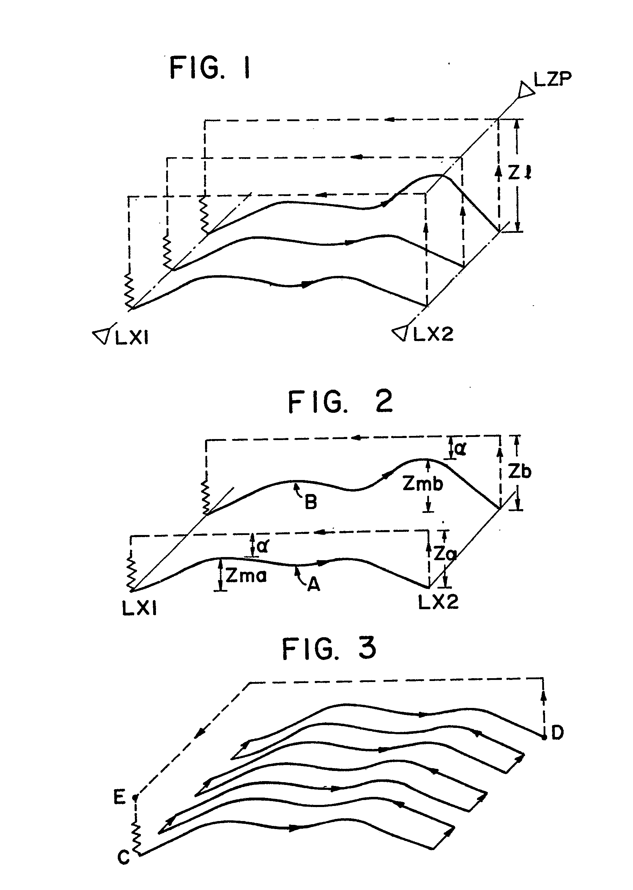

In conventional tracer control apparatus, the starting and the terminating ends of a trace path and a Z-axis position for quick return use are defined by limit switches. In the case of a one-way scan trace, a limit switch LX1 for the trace starting end, a limit switch LX2 for the trace terminating end and a Z-axis limit switch LZP for quick return use are provided at predetermined positions, as shown in Figure 1 of the accompanying drawings which is a schematic diagram. When it is detected by operation of limit switch LX2 that a tracer head has reached the terminating end of a trace path, the tracer head is quickly returned in the Z-axis direction; that is, the tracer head is lifted away from a model being traced. When it is detected by operation of limit switch LZP that the tracer head has risen up to a height Z at which the tracer head will not strike against the model, the tracer head is quickly returned in the X-axis direction. When it is detected by operation of limit switch LX1 that the tracer head has returned to the trace starting end, the tracer head commences to approach the model and when the tracer head arrives at a position spaced a predetermined distance from the model, the tracer head is subjected to deceleration control. When the tracer head moves into contact with the model, pick feed is performed and then the tracer head commences to trace the model surface in the X-axis direction.

The limit switch LZP is placed above the highest level of the model surface, preventing collision of the tracer head with the model in its quick-return motion in the X-axis direction.

With such an arrangement, however, in a case in which the model surface has only one peak, the tracer head is always raised higher than the peak in the Z-axis direction; accordingly, even when the peak does not lie in the X-axis trace path, the tracer head is raised higher than the peak and the quick-return motion of the tracer head becomes excessive. Further, this arrangement requires adjustment of the position of the limit switch LZP for each model and involves mechanical limit switches, presenting a problem in terms of reliability.

US—A—3 475 997 contains a disclosure relevant to the problem of rapidly traversing a cutter until it engages a workpiece and after such engagement feeding the cutter until it penetrates the workpiece to a desired depth. There are described therein a method and apparatus for "short stroking" a cutter in such a manner that, after each penetration of the workpiece, the cutter is retracted to clear the workpiece surface by a predetermined distance prior to the next penetration step.

According to the present invention there is provided a tracer control apparatus in which the surface configuration of a model is detected by a tracer head which is controlled to move over the model surface from a trace starting end to a trace terminating end at which trace terminating end the tracer head is lifted away from the model and returned to the trace starting end, wherein the apparatus comprises means for detecting during tracing the present position of the tracer head, in a direction in which the tracer head is lifted away from the model at the trace terminating end, memory means for storing a maximum one of the values of the detected tracer head positions, and means whereby when the tracer head reaches the trace terminating end, it is quickly lifted away from the model to a position corresponding to the sum of the maximum value stored in the memory means and a predetermined constant value.

An embodiment of the present invention can provide a tracer control apparatus which stores a highest level of a model surface in memory means to thereby dispense with mechanical limit switches, and performs a quick-return motion of the tracer head (lifting of the tracer head away from the model) corresponding to the height of the model surface, thus providing for enhanced reliability in operation and reduced time for the quick-return motion of the tracer head.

Briefly, a tracer control apparatus embodying the present invention is provided with a counter or like means for detecting the present position of the tracer head in the direction of its return from a terminating end of a trace path, that is, its direction of lifting away from the model, the Z-axis direction, and a memory or like means for storing a maximum value of the position of the tracer head in the Z-axis direction during tracing, detected by detecting means. Upon completion of a tracing operation, the tracer head is quickly lifted from the terminating end of the trace path to such a position that corresponds to the sum of the abovesaid maximum value and a certain additional value, thus minimizing the quick-return motion of the tracer head. Thus, an efficient quick-return motion of a tracer head from the terminating end of a trace path to the starting end of the next trace path is provided.

Reference is made, by way of example to the accompanying drawings, in which:—

Figure 1 is, as mentioned above, a schematic diagram explanatory of a conventional one-way scan trace;

Figure 2 is a schematic diagram explanatory of a one-way scan trace operation in accordance with an embodiment of the present invention;

Figure 3 is a schematic diagram explanatory of a both-way scan trace operation in accordance with another embodiment of the present invention;

Figure 4 is a block diagram illustrating a specific arrangement embodying the present invention; and

Figures 5 and 6 are flowcharts respectively illustrating one-way scan trace operation and the both-way scan trace operation in embodiments of this invention.

Figure 2 is explanatory of a one-way scan trace operation of an embodiment of the present invention. In this embodiment, the highest levels Zma and Zmb of the model surface in trace paths A and B from the trace starting end (LX1) to the terminating end (LX2) are stored. In quick-return operations of the tracer head after tracing paths A and B, the tracer head is quickly lifted away from the model to positions, $Za=Zma+\alpha$ and $Zb=Zmb+\alpha$ respectively, in the Z-axis direction and then quickly returned in the X-axis direction. Accordingly, if $Zma<Zmb$, then $Za<Zb$. When the surface level of the model in the trace paths is low, the distance of quick return lift in the Z-axis direction becomes small, reducing the time for the quick return operation as a whole.

Figure 3 is explanatory of a both-way scan trace operation of another embodiment of the present invention. The tracer head starts tracing from a point C, as indicated by the solid line, and when the tracer head reaches a point D it is quickly returned to point E as indicated by the broken line. Upon arrival at point E, the tracer head commences to approach the model. In this case, the height of the highest point in the trace path from the point C to the point D is stored and the tracer head is quickly lifted from the point D to a position higher than the highest point by a predetermined distance.

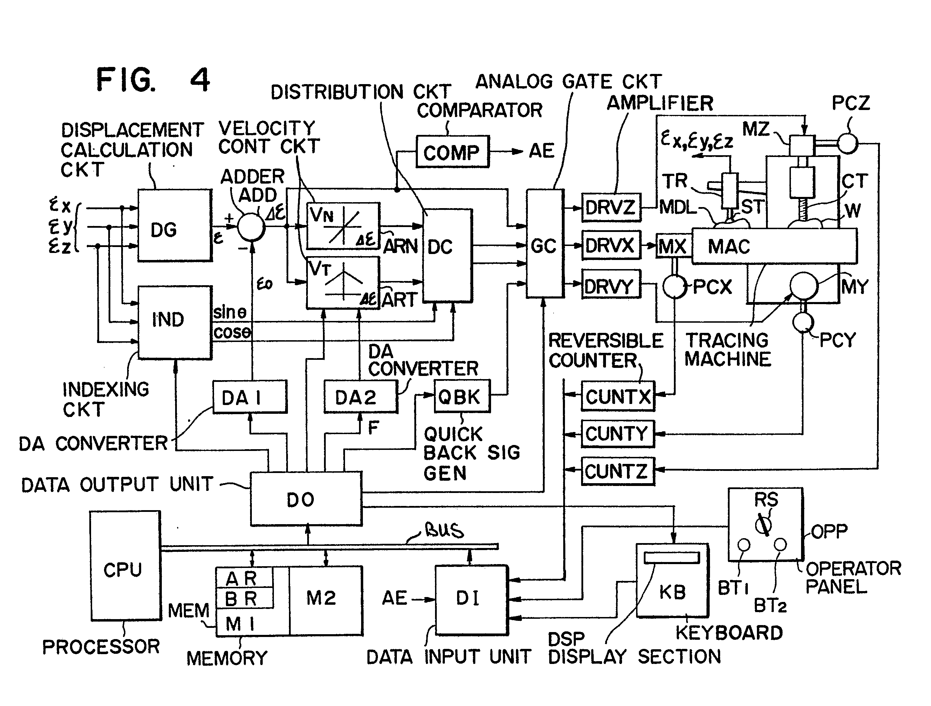

Figure 4 illustrates in block form a specific arrangement of a tracer control system embodying the present invention. In Figure 4, DG is a displacement calculation circuit which is supplied with displacement signals $\varepsilon_x$, $\varepsilon_y$ and $\varepsilon_z$ from a tracer head TR to provide a composite displacement signal,

$$\varepsilon=\sqrt{\varepsilon_x{}^2+\varepsilon_y{}^2+\varepsilon_z{}^2};$$

IND is an indexing circuit which is also supplied with the displacement signals $\varepsilon_x$, $\varepsilon_y$ and $\varepsilon_z$ to produce direction-of-displacement signals $\sin\theta$ and $\cos\theta$; ADD is an adder which yields a difference $\Delta\varepsilon$ between the composite displacement signal $\varepsilon$ and a reference displacement signal $\varepsilon_o$; ARN and ART are velocity control circuits which provide a normal-direction velocity signal $V_N$ and a tangential-direction velocity signal $V_T$, respectively; DC is a distribution circuit which derives a velocity command signal from the normal-direction velocity signal $V_N$ and the tangential-direction velocity signal $V_T$ in accordance with the direction-of-displacement signals $\sin\theta$ and $\cos\theta$; COMP is a comparator which provides an approach end signal AE when

$\Delta\varepsilon=0$; DA1 and DA2 are D—A converters; GC is an analog gate circuit; DRVX DRVY and DRVZ are amplifiers; MX, MY and MZ are servo motors; PCX, PCY and PCZ are position detectors; CUNTX, CUNTY and CUNTZ are reversible counters which count pulses from the position detectors to indicate the present position of the tracer head; MAC is a tracing machine; W is a workpiece; MDL is a model; CT is a cutter; TR is a tracer head; ST is a stylus; OPP is an operator panel; RS is a setting dial for velocity or the like; BT1 and BT2 are push buttons; KB is a keyboard; DSP is a display section; DI is a data input unit; DO is a data output unit; MEM is a memory composed of a data memory part M1 and a control program part M2; BUS is a data bus; CPU indicates a processor; and QBK is a quick back signal generator.

The data memory part M1 of the memory MEM has input thereto from the keyboard KB or the like and stored therein modes of operation such as one-way scan trace, both-way scan trace, contour trace and so forth, the reference displacement $\varepsilon_0$, the approach axis, direction and velocity, the trace direction and velocity, the pick feed direction, velocity and value, trace starting and terminating ends, the quick-return velocity, etc. Further, registers AR and BR are provided in the data memory part M1.

In the case where the trace mode is the one-way scan trace mode, the trace direction is the X-axis direction, the approach direction is the Z-axis direction and the pick feed direction is the Y-axis direction, the servo motor MX is driven to feed in the X-axis direction the stylus ST in contact with the surface of the model MDL and the servo motor MZ is driven in accordance with displacement of the stylus ST, cutting the workpiece W with the cutter CT in imitation of the model MDL. Since each operation of such tracing is already known, a detailed description will not be given thereof.

The content of the reversible counter CUNTZ indicates the position of the tracer head in the Z-axis direction. The processor CPU periodically reads out the content of the reversible counter CUNTZ via the data input unit DI for comparison with the content of the register AR of the data memory part M1 and updates the register AR only when the content of the reversible counter CUNTZ is larger than the content of the register AR. Accordingly, a maximum value of the reversible counter CUNTZ during tracing from the trace starting end to the terminating end is set in the register AR, indicating the highest level of the surface of the model MDL. In the quick return from the trace terminating end, a predetermined certain value $\alpha$ is added to the content of the register AR and the added output is set in the register BR and the register AR is cleared.

Further, the processor CPU applies a quick return command via the data output unit DO to the quick back signal generator QBK and controls the analog gate circuit GC so that the servo motor MZ is driven by a signal from the quick back signal generator QBK. The processor CPU periodically reads out and compares the contents of the register BR and the reversible counter CUNTZ and, in the case of coincidence, controls the analog gate circuit GC to drive the servo motor MX, shifting the Z-axis quick-return operation to the X-axis quick-return operation. Accordingly, in the Z-axis quick-return operation, the tracer head TR is lifted away from the model to the position corresponding to the sum of the maximum height of the model MDL and the certain value $\alpha$, and in the case where the maximum height of the model MDL is small, the distance of quick return lifting of the tracer head TR in the Z-axis direction is reduced.

The contents of reversible counters CUNTX and CUNTY respectively indicate the present positions of the tracer head TR in the X-axis and the Y-axis direction. The processor CPU compares the content of the reversible counter CUNTX with the trace starting and terminating ends stored in the data memory part M1 and, in the case of coincidence between the content of the reversible counter CUNTX and the stored trace terminating end, outputs a quick return command to start the aforesaid quick-return operation. When the content of the reversible counter CUNTX and the stored trace starting end coincide with each other as a result of the quick return, the tracer head TR is caused to begin an approach towards the model MDL in the Z-axis direction. The end of approach is detected by the comparator COMP and pick feed is started. When the content of the reversible counter CUNTY coincides with the value provided when the pick value is added to the content of the reversible counter CUNTY at the time of starting pick feed, pick feed comes to an end and trace in the X-axis direction is started. In this way, tracer control can be achieved, omitting all the limit switches of the prior art example shown in Figure 1.

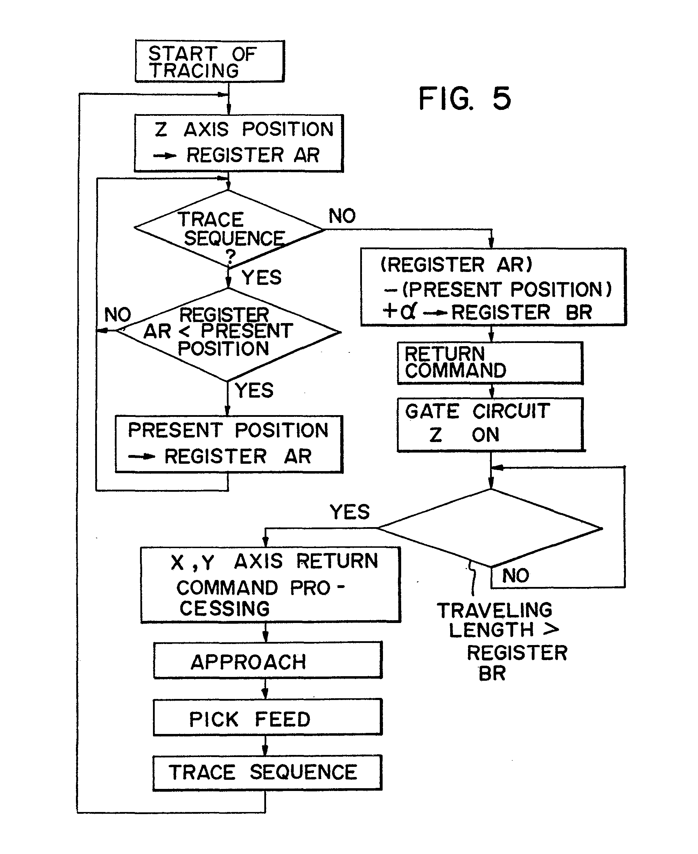

Figure 5 is a flowchart explanatory of the operation of one embodiment of the present invention. Upon commencement of tracing, the position of the tracer head in the Z-axis direction, that is, the content of the reversible counter CUNTZ is set in the register AR. When a trace sequence is to be executed, the content of the register AR and the present position of the tracer head in the Z-axis direction are compared with each other, and if the latter is larger than the former, the register AR is updated. When quick return is to be executed, the present position of the tracer head is subtracted from the content of the register Ar to obtain the value of distance from the present position of the tracer head to the highest level of the model surface; the aforesaid constant value $\alpha$ is added to the abovesaid value; the added value is set in the register BR; a quick return command is output and the analog gate circuit GC is changed over to the Z-axis side.

The distance moved by the tracer head (travelling length) in the Z-axis direction is compared with the content of the register BR and when the former becomes larger than the latter X, Y return command processing is performed to quickly return the tracer head to the trace starting end in the X-axis direction in the above-described embodiment. Then, the approach operation starts and when it comes to an end, pick feed takes place and thereafter shifts to trace sequence.

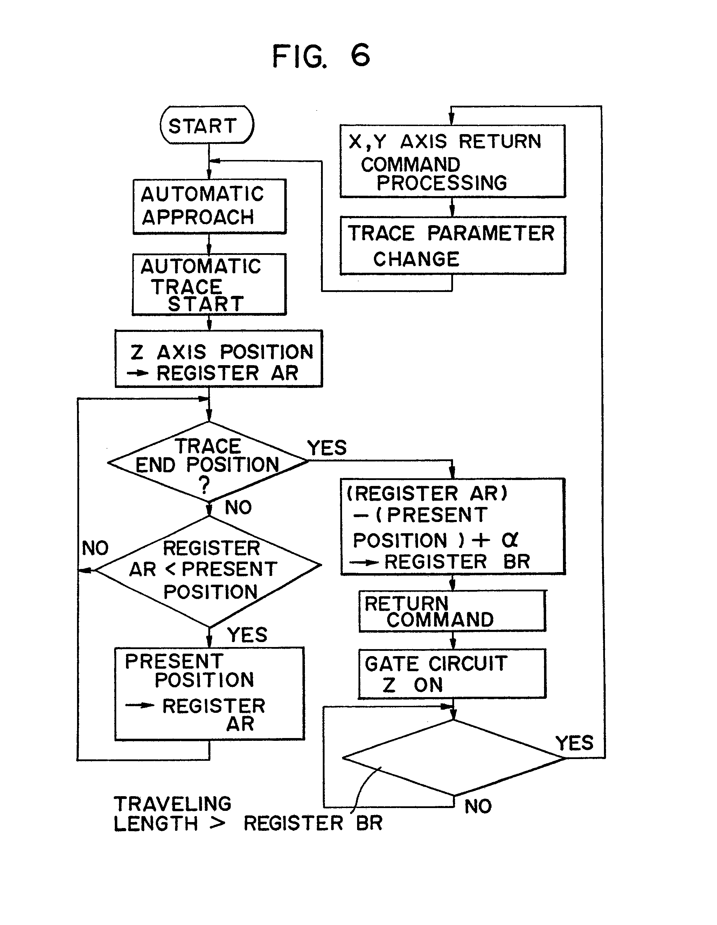

Figure 6 is a flowchart of the operation of another embodiment of the present invention as applied to automatic running for a both-way scan trace such as is depicted in Figure 3. This flowchart is substantially the same as that of Figure 5. When the trace terminating end position, that is, the point D in Figure 3, is detected by the contents of the reversible counters CUNTX and CUNTY, trace operation shifts to the quick-return operation. In this case, since the content of the register AR indicates the highest level of the model surface, the present position of the tracer head in the Z-axis direction is subtracted from the content of the register AR and the aforementioned constant value $\alpha$ is added to the subtracted value and then the quick-return position in the Z-axis direction is set in the register BR. When the distance moved by the tracer head TR in the Z-axis direction exceeds the content of the register BR, the X, Y return command processing takes place to bring the tracer head to the point E in Figure 3, and trace parameters such as the trace direction, the trace velocity and so forth are modified to start the approach operation again. In other words, rough machining can automatically be followed by finish machining.

The foregoing embodiments have been described in connection with the tracer head return in a simultaneous one-axis operation, but the present invention is also applicable to the tracer head return in a simultaneous two-axis or three-axis operation.

As has been described in the foregoing, the tracer control system of the present invention is provided with reversible counter CUNTZ or like means for detecting the present position of the tracer head in the direction of its lifting away from the model at the trace terminating end, and register AR or like means for storing a maximum value for the position of the head detected during tracing. In a return operation from the trace terminating end, the tracer head is quickly lifted to a position corresponding to the sum of the abovesaid maximum value and the constant value $\alpha$; namely, the tracer head is moved up to a position higher than the highest level of the model surface detected during the trace operation. Since the distance of this quick return lift is automatically set, the tracer head is not excessively lifted, thus reducing the quick-return time. Further, since no mechanical setting means such as limit switches are required, the tracer control system of the present invention is easy to operate and highly reliable in operation.

It will be apparent that many modifications and variations may be effected without departing from the scope of the novel concepts of this invention.

Thus, during tracing operation of a tracer head (TR), the present position of the tracer head in the Z-axis direction is detected and a maximum value (Zma) of the detected tracer head positions is stored in a memory means (AR). When the tracer head (TR) is returned from a trace terminating end (LX2) to a trace starting end (LX1), it is quickly lifted away from the model to a position (Zma+$\alpha$) corresponding to the sum of the stored maximum value (Zma) and a constant value ($\alpha$).

## Claims

1. A tracer control apparatus in which the surface configuration of a model (MDL) is detected by a tracer head (TR) which is controlled to move over the model surface from a trace starting end (LX1, C) to a trace terminating end (LX2, D) at which trace terminating end the tracer head (TR) is lifted away from the model (MDL) and returned to the trace starting end (LX1, C), wherein the apparatus comprises means (PCZ, CUNTZ) for detecting during tracing the present position of the tracer head (TR), in a direction in which the tracer head (TR) is lifted away from the model (MDL) at the trace terminating end (LX2, D), memory means (AR) for storing a maximum one (Zma, Zmb) of the values of the detected tracer head positions, and means (CPU, BR, QBK) whereby when the tracer head (TR) reaches the trace terminating end (LX2, D), it is quickly lifted away from the model (MDL) to a position corresponding to the sum (Za, Zb) of the maximum value (Zma, Zmb) stored in the memory means (AR) and a predetermined constant value ($\alpha$).

2. A tracer control apparatus according to claim 1, having means (PCZ, CUNTZ) for detecting, during tracing, the present position of the tracer head (TR) in the Z-axis direction, in which direction the tracer head (TR) is lifted at the trace terminating end (LX2, D), and a register (AR) for storing a maximum one (Zma, Zmb) of the values of the detected Z-axis direction positions, and means (CPU) whereby the present position of the tracer head (TR) in the Z-axis direction at the trace terminating end (LX2, D) is subtracted from the maximum value (Zma, Zmb) stored in the register (AR) and the tracer head (TR) is quickly lifted in the Z-axis direction to a position corresponding to the sum of the result of the subtraction and the predetermined constant value ($\alpha$).

3. A tracer control apparatus according to claim 1 or 2, which comprises means (PCZ, CUNTZ) for detecting the present position of the tracer head (TR) in the Z-axis direction, in which direction the tracer head (TR) is lifted from the trace terminating end (LX2, D), by a reversible counter (CUNTZ) counting pulses from a position detector (PCZ), and a register (AR) for storing a maximum value (Zma, Zmb) of the count content of the reversible counter (CUNTZ).

## Patentansprüche

1. Kopiersteuerungsvorrichtung, bei welcher die Oberflächengestalt einer Vorlage (MDL) mit Hilfe eines Abtastkopfs (TR) nachgewiesen wird, der so gesteuert wird, daß er sich über die Oberfläche der Vorlage von einem Spuranfang (LX1, C) zu einem Spurende (LX2, D) bewegt, an welchem Spurende der Abtastkopf (TR) von der Vorlage (MDL) abgehoben und an den Spuranfang (LX1, C) zurückgeführt wird, dadurch gekennzeichnet, daß die Vorrichtung eine Einrichtung (PCZ, CUNTZ) aufweist, die während des Abtastens die augenblickliche Position des Abtastkopfs (TR) in einer Richtung nachweist, in der der Abtastkopf (TR) am Spurende (LX2, D) von der Vorlage (MDL) abgehoben wird, ferner ein Speicherelement (AR) zum speichern des größten (Zma, Zmb) der Werte der nachgewiesenen Abtastkopfpositionen, und schließlich eine Einrichtung (CPU, BR, QBK), durch die der Abtastkopf (TR), wenn er das Spurende (LX2, D) erreicht, schnell von der Vorlage (MDL) in eine Position angehoben wird, die der Summe (Za, Zb) aus dem in dem Speicherelement (AR) gespeicherten Größtwert (Zma, Zmb) und einem vorgegebenen konstanten Wert ($\alpha$) entspricht.

2. Kopiersteuerungsvorrichtung nach Anspruch 1, gekennzeichnet durch eine Einrichtung (PCZ, CUNTZ) zum Nachweisen der augenblicklichen Position des Abtastkopfs (TR) in Z-Achsen-Richtung während des Abtastvorgangs, in welcher Richtung der Abtastkopf (TR) am Spurende (LX2, D) angehoben wird, durch ein Register (AR) zum Speichern des größten (Zma, Zmb) der Werte der nachgewiesenen Positionen in Z-Achsen-Richtung und durch eine Einrichtung (CPU), durch die die augenblickliche Position des Abtastkopfs (TR) in Z-Achsen-Richtung am Spurende (LX2, D) von dem Größtwert (Zma, Zmb), der in dem Register (AR) respeichert ist, subtrahiert wird und der Abtastkopf (TR) schnell in Z-Achsen-Richtung in eine Position angehoben wird, die der Summe aus dem Ergebnis der Subtraktion und dem vorgegebenen konstanten Wert ($\alpha$) entspricht.

3. Kopiersteuerungsvorrichtung nach Anspruch 1 oder 2, gekennzeichnet durch eine Einrichtung (PCZ, CUNTZ) zum Nachweisen der augenblicklichen Position des Abtastkopfs (TR) in Z-Achsen-Richtung, in welcher Richtung der Abtastkopf (TR) von dem Spurende (LX2, D) angehoben wird, mittels eines Zweirichtungszählers (CUNTZ), der die von einem Positionsdetektor (PCZ) kommenden Impulse zählt, und eines Registers (AR) zum Speichern eines Größtwerts (Zma, Zmb) des Zählinhalts des Zweirichtungszählers (CUNTZ).

## Revendications

1. Un dispositif de commande de copiage dans lequel la configuration de surface d'un modèle (MDL) est détectée par un palpeur (TR) qui est commandé de façon à se déplacer sur la surface du modèle depuis une extrémité de départ du copiage (LX1, C) jusqu'à une extrémité de fin du copiage (LX2, D) à laquelle le palpeur (TR) est soulevé par rapport au modèle (MDL) et est ramené à l'extrémité de départ du copiage (LX1, C), le dispositif comprenant des moyens (PCZ, CUNTZ) pour détecter la position courante du palpeur (TR) pendant le copiage, dans une direction dans laquelle le palpeur (TR) est soulevé par rapport au modèle (MDL) à l'extrémité de fin du copiage (LX2, D), des moyens de mémoire (AR) pour enregistrer une valeur maximale (Zma, Zmb) parmi les valeurs de positions détectées du palpeur, et des moyens (CPU, BR, QBK) sous l'action desquels, lorsque le palpeur (TR) atteint l'extrémité de fin du copiage (LX2, D), il est rapidement soulevé par rapport au modèle (MDL) jusqu'à une position qui correspond à la somme (Za, Zb) de la valeur maximale (Zma, Zmb) enregistrée dans les moyens de mémoire (AR) et d'une valeur constante prédéterminée ($\alpha$).

2. Un dispositif de commande de copiage selon la revendication 1, comportant des moyens (PCZ, CUNTZ) pour détecter, pendant le copiage, la position courante du palpeur (TR) dans la direction de l'axe Z, cette direction étant celle dans laquelle le palpeur (TR) est soulevé à l'extrémité de fin du copiage (LX2, D), et un registre (AR) pour enregistrer une valeur maximale (Zma, Zmb) parmi les valeurs des positions détectées dans la direction de l'axe Z, et des moyens (CPU) sous l'action desquels la position courante du palpeur (TR) dans la direction de l'axe Z à l'extrémité de fin du copiage (LX2, D) est soustraite de la valeur maximale (Zma, Zmb) enregistrée dans le registre (AR) et le palpeur (TR) est soulevé rapidement dans la direction de l'axe Z, jusqu'à une position qui correspond à la somme du résultat de la soustraction et de la valeur constante prédéterminée ($\alpha$).

3. Un dispositif de commande de copiage selon la revendication 1 ou 2, comprenant des moyens (PCZ, CUNTZ) pour détecter la position courante du palpeur (TR) dans la direction de l'axe Z, cette direction étant celle dans laquelle le palpeur (TR) est soulevé à partir de l'extrémité de fin du copiage (LX2, D), par un compteur réversible (CUNTZ) qui compte des impulsions provenant d'un détecteur de position (PCZ) et un registre (AR) pour enregistrer une valeur maximale (Zma, Zmb) du compte contenu dans le compteur réversible (CUNTZ).

FIG. 1

FIG. 2

FIG. 3

FIG. 4

FIG. 5

# FIG. 6